# EUROPEAN PATENT APPLICATION

(11) **EP 4 818 880 A1**
(43) Date of publication of application: **07.10.2026**
(21) Application number: 25190446.2
(22) Date of filing: 18.07.2025
(51) Int. Cl.: G06F 3/12, G06F 9/54, H04L 67/2876

(54) **INFORMATION PROCESSING APPARATUS, IMAGE PROCESSING APPARATUS, AND STORAGE MEDIUM**

(30) Priority: 04.04.2025 JP 2025062578
(71) Applicant: ETRIA Co., Ltd., Yokohama Kanagawa (JP)
(72) Inventor: KATO, Hiroyuki, Yokohama (JP)
(74) Representative: J A Kemp LLP

(57) **Abstract**

According to the embodiment, an information processing apparatus includes a communication interface, a memory, and a processor. In a case where the application program in the memory communicates with another application program in the same apparatus, the processor activates the internal communication server process by the management program. In a case where the application program in the memory communicates with another application program in the external apparatus connected by the communication interface, the processor activates the external communication server process by the management program.

## Description

### FIELD

Embodiments of the present invention relate to an information processing apparatus, an image processing apparatus, and a storage medium.

### BACKGROUND

In the related art, an image forming apparatus such as a digital multifunction peripheral having various functions is known as an image forming apparatus (image processing apparatus) placed in a work place. An image forming apparatus such as a digital multifunction peripheral executes various functions by an application program (hereinafter, also referred to as a "built-in application") installed in a storage unit. Some built-in applications have a function of communicating with another built-in application (hereinafter referred to as an "inter-application communication function"). The plurality of built-in applications can execute a series of functions in cooperation with each other by the inter-application communication function.

However, the inter-application communication function by the built-in application used in the conventional image forming apparatus has a problem that fine publishing control cannot be performed. For example, a built-in application used in a conventional image forming apparatus always opens a network port for external access so as to immediately respond to a communication request. Keeping the network port open to the outside at all times has a problem that the possibility of being attacked from the outside increases and the security risk increases.

### SUMMARY

### TECHNICAL PROBLEM

An object of the present invention is to provide an information processing apparatus and an image processing apparatus capable of performing detailed communication control.

### SOLUTION TO PROBLEM

According to the embodiment, an information processing apparatus includes a communication interface, a memory, and a processor. In a case where the application program in the memory communicates with another application program in the same apparatus, the processor activates the internal communication server process by the management program. In a case where the application program in the memory communicates with another application program in the external apparatus connected by the communication interface, the processor activates the external communication server process by the management program.

### BRIEF DESCRIPTION OF THE DRAWINGS

FIG. 1 is a diagram illustrating a configuration example of an image forming system including an image forming apparatus as an information processing apparatus and an image processing apparatus according to the embodiment.
FIG. 2 is a diagram illustrating a configuration example of an image forming apparatus as an information processing apparatus and an image processing apparatus according to the embodiment.
FIG. 3 is a diagram illustrating an example of a setting table in an image forming apparatus as an information processing apparatus and an image processing apparatus according to the embodiment.
FIG. 4 is a diagram schematically illustrating an example of an application that performs inter-application communication in the same apparatus in the image forming apparatus according to the embodiment.
FIG. 5 is a sequence diagram for describing an operation example in a case where inter-application communication is performed by an application in the same apparatus in the image forming apparatus according to the embodiment.
FIG. 6 is a sequence diagram for describing an operation example in a case where inter-application communication is performed by an application in the same apparatus in the image forming apparatus according to the embodiment.
FIG. 7 is a diagram schematically illustrating an example of an application that performs inter-application communication in different apparatuses in the image forming apparatus according to the embodiment.
FIG. 8 is a sequence diagram for describing an operation example in a case where inter-application communication is performed by an application in a different apparatus in the image forming apparatus according to the embodiment.
FIG. 9 is a sequence diagram for describing an operation example in a case where inter-application communication is performed by an application in a different apparatus in the image forming apparatus according to the embodiment.

### DETAILED DESCRIPTION

Hereinafter, embodiments will be described with reference to the drawings.

First, an image forming system (information processing system) 1 including an image forming apparatus (information processing apparatus and image processing apparatus) 11 according to the embodiment will be described.

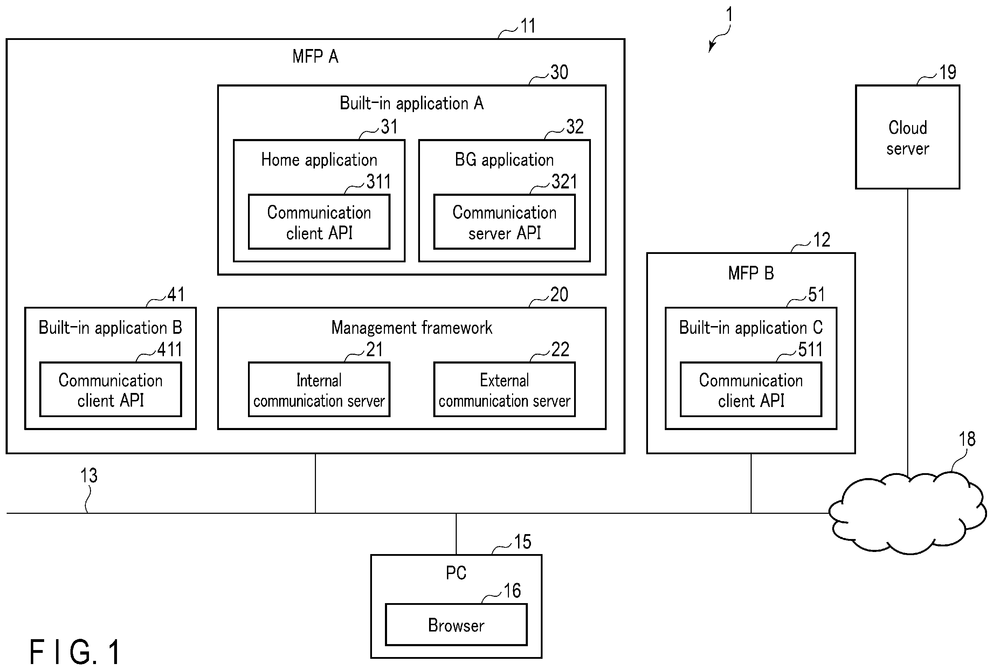

FIG. 1 is a diagram schematically illustrating a configuration example of an image forming system 1 including an image forming apparatus 11 according to the embodiment.

The image forming system 1 includes an image forming apparatus (MFP_A) 11, an image forming apparatus (MFP_B) 12, a local area network (LAN) 13, a personal computer (PC) 15, a network 18, a cloud server 19, and the like.

The image forming apparatus 11, the image forming apparatus 12, and the personal computer 15 are connected to the LAN 13 and can communicate with each other via the LAN 13. The image forming apparatus 11, the image forming apparatus 12, and the personal computer 15 can also communicate with the cloud server 19 via the network 18.

The image forming apparatus 11 and the image forming apparatus 12 are, for example, multifunction peripherals (MFP) having various functions. Hereinafter, a multifunction peripheral as an image forming apparatus may be abbreviated as an MFP. The multifunction peripherals (MFP) as the image forming apparatuses 11 and 12 have various functions using images.

For example, the image forming apparatuses 11 and 12 have a print function, a scan function, a copy function, a facsimile (FAX) function, and the like as basic functions including image processing. The print function is a function of printing an image on paper. The scan function is a function of reading an image from a document or the like. The copy function is, for example, a function of printing an image read from a document or the like using the scan function on paper using the print function. The facsimile function is, for example, a function of transmitting an image read from a document or the like using a scan function to the outside or printing an image received from the outside on paper using a print function.

Furthermore, in the embodiment, each of the image forming apparatuses 11 and 12 is an example of an information processing apparatus (image processing apparatus). Each of the image forming apparatuses 11 and 12 as an information processing apparatus includes a processor that executes a program, a memory that stores the program, and a communication interface that transmits and receives data. In the embodiment, an application program (application) that cooperates with another application program (application) is installed in the image forming apparatus 11 via a server process for communication. The image forming apparatus 11 is also referred to as an MFP_A. An application (an application of a different apparatus) cooperating with the application of the image forming apparatus 11 is installed in the image forming apparatus 12. The image forming apparatus 12 is an example of an apparatus different from the image forming apparatus 11, and is also referred to as an MFP_B.

The application installed in the image forming apparatuses 11 and 12 is a program for causing the image forming apparatus to execute processing for achieving a specific work or purpose. For example, the application is a program that causes the image forming apparatuses 11 and 12 to execute a scan function, a print function, or a data processing function related to an image processing function such as the print function. In addition, the application is installed, for example, by a browser 16 of the PC 15 communicatively connected to the image forming apparatuses 11 and 12.

In the configuration example illustrated in FIG. 1, programs such as a management program (hereinafter, a management framework) 20, an application program A (hereinafter, a built-in application A) 30, and an application program B (hereinafter, the built-in application B) 41 are installed in the image forming apparatus 11. In addition, an application program C (hereinafter, a built-in application C) 51 is installed in the image forming apparatus (MFP_B) 12. The built-in application A 30 is an example of an application program that cooperates with the built-in application B 41 and the built-in application C 51.

The management framework 20 in the image forming apparatus 11 enables application cooperation by an application programming interface (API). For example, the management framework 20 provides, as server functions, an internal communication server process (hereinafter, it is also simply referred to as an internal communication server) 21 and an external communication server process (hereinafter, it is also simply referred to as an external communication server) 22 in response to a request from an application.

The internal communication server 21 is a server function of performing data communication between applications in the same image forming apparatus 11. The internal communication server 21 realizes communication in the image forming apparatus 11 without publishing the network port to the outside. Since the internal communication server 21 transmits and receives data in one image forming apparatus 11 without being published to the outside, a possibility that data in communication leaks to the outside is suppressed.

The external communication server 22 is a server function of performing data communication between an application in the image forming apparatus 11 and an application in another image forming apparatus 12 that is an external apparatus. The external communication server 22 publishes the network port to the outside, thereby realizing communication between applications of different image forming apparatuses 11. The external communication server 22 can also communicate with applications of a plurality of different image forming apparatuses connected by the LAN 13 through a network port published to the outside.

The built-in application A 30 in the image forming apparatus 11 includes a Home application 31 and a BG application 32. The Home application 31 functions as a client side application (client application) in the built-in application A 30 by the communication client API 311. The BG application 32 functions as a server side application (server application) that communicates with the client side application by the communication server API 321.

The BG application 32 of the built-in application A 30 in the image forming apparatus 11 activates the internal communication server 21 provided by the management framework 20. The BG application 32 of the built-in application A 30 performs data communication between applications in the image forming apparatus 11 using the internal communication server 21. For example, in the configuration example illustrated in FIG. 1, the BG application 32 of the built-in application A communicates with the Home application 31 or the built-in application B 41 in the same image forming apparatus (MFP_A) 11 via the internal communication server 21.

The built-in application B 41 in the image forming apparatus 11 is an example of a built-in application, in the same image forming apparatus 11, in cooperation with the built-in application A 30 in the image forming apparatus 11. The built-in application B 41 functions as a client application by the communication client API 411. The built-in application B 41 communicates with the built-in application A 30 by the internal communication server 21 activated by the BG application 32.

Furthermore, the BG application 32 of the built-in application A 30 in the image forming apparatus 11 activates the external communication server 22 provided by the management framework 20. The BG application 32 of the built-in application A 30 performs data communication with the built-in application of a different image forming apparatus using the external communication server 22. In the configuration example illustrated in FIG. 1, the BG application 32 of the built-in application A 30 communicates with the built-in application C 51 in another image forming apparatus (MFP_B) 12 as an external apparatus via the external communication server 22 and the internal communication server 21.

The built-in application C 51 in the image forming apparatus 12 is an example of an application in the image forming apparatus 11 different from the image forming apparatus 11, the application being in cooperation with the built-in application A in the image forming apparatus 12. The built-in application C 51 functions as a client application by the communication client API 511. The built-in application C 51 of the image forming apparatus 12 communicates with the built-in application A 30 of the image forming apparatus 11 by the external communication server 22 and the internal communication server 21 activated by the BG application 32.

The personal computer 15 is an example of a user terminal apparatus operated by an operator. The personal computer 15 transmits a print request such as image printing to the image forming apparatus 11 and receives image data processed by the image forming apparatus 11, for example. In addition, the browser 16 for accessing the Web is installed in the personal computer 15. The personal computer 15 accesses the cloud server 19 via the network 18 by the browser 16. The personal computer 15 has a function of installing an application in the image forming apparatuses 11 and 12 by the browser 16.

The cloud server 19 is a server apparatus that communicates with the image forming apparatuses 11 and 12 or the PC 15 via the wide-area network 18. The cloud server 19 provides various services such as data storage to the image forming system 1 including the image forming apparatuses 11 and 12. For example, the cloud server 19 stores image data in response to a request from the image forming apparatuses 11 and 12. In addition, the cloud server 19 executes data processing such as an image process on image data and a file data format conversion process in response to a request from the image forming apparatuses 11 and 12.

Next, a configuration example of a control system in the image forming apparatus 11 as the information processing apparatus according to the embodiment will be described.

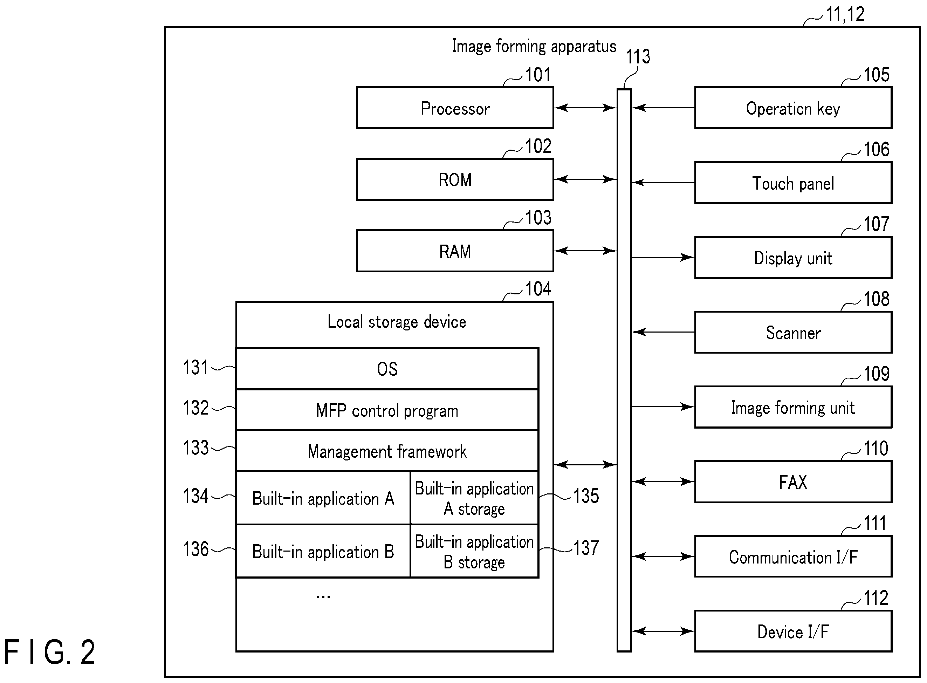

FIG. 2 is a block diagram schematically illustrating a configuration example of a control system in the image forming apparatus 11 according to the embodiment.

The image forming apparatus 11 includes a processor 101, a read only memory (ROM) 102, a random access memory (RAM) 103, a local storage device 104, an operation key 105, a touch panel 106, a display unit 107, a scanner 108, an image forming unit 109, a facsimile (FAX) 110, a communication interface (I/F) 111, a device interface (I/F) 112, a system bus 113, and the like.

The processor 101 is an arithmetic element that executes arithmetic processing. The processor 101 executes a program stored in a memory such as the ROM 102 or the local storage device 104. The processor 101 is, for example, a central processing unit (CPU). Furthermore, the processor 101 may include a graphical processing unit (GPU) or the like.

The ROM 102 is a nonvolatile memory constituting part of the main memory. The ROM 102 non-temporarily stores a program such as an activation program necessary for activation of the image forming apparatus 11. The ROM 102 may include, for example, an erasable programmable read only memory (EPROM). The ROM 102 may store various setting data at the time of activation in addition to the activation program.

The RAM 103 is a volatile memory constituting part of the main memory. The RAM 103 temporarily stores a program necessary for processing of the processor 101 and data necessary for executing the program. The RAM 103 functions as, for example, a working memory of the processor 101.

The local storage device 104 is, for example, a rewritable nonvolatile memory including a hard disk drive (HDD), a solid state drive (SSD), or the like. The local storage device 104 non-temporarily stores a program executed by the processor 101 and data necessary for executing the program. The program stored in the local storage device 104 will be described later.

The operation key 105 is an input device that receives an instruction from a user. The operation key 105 includes, for example, a plurality of push keys allocated to each function, and receives an instruction from the user via an operation of the push key.

The touch panel 106 is an input device that receives an instruction from a user. The touch panel 106 receives an instruction from the user by detecting a touch operation with a finger or a touch pen.

The display unit 107 is an output device that presents information to the user. Specifically, the display unit 107 is a display device that displays information to be presented to the user. The display unit 107 includes a liquid crystal display, an organic EL display, or the like.

The display unit 107 and the touch panel 106 may be configured as a combined input/output device. For example, the touch panel 106 is provided to overlap the display screen of the display unit 107.

The scanner 108 is an example of an image processing unit that is a device that executes a scan function. The scanner 108 is a device that reads an image from a document. The scanner 108 includes, for example, document glass and a reading module. The reading module reads an image from a document placed on a document glass or a document transmitted to the document glass by a document feeder. The reading module irradiates a document to be read with illumination light, receives the reflected light by the image sensor, and converts the reflected light into a digital signal. Accordingly, the reading module reads the image from the document.

The image forming unit 109 is an example of an image processing unit that is a device that executes a print function. The image forming unit 109 is a printer that forms an image on a paper (medium). Based on the supplied print data, the image forming unit 109 prints an image based on the image data included in the print data on the paper conveyed by the paper conveyance apparatus. For example, in a case where the copy function is executed, the print data includes image data read from the document by the scanner 108. Furthermore, the print data may include, for example, image data transmitted from an external apparatus (for example, the PC 15). The print data may include image data received by the facsimile 110. The print data may include image data stored in an external device connected to the device interface 112 of the image forming apparatus 11.

The image forming unit 109 may form an image by any image forming method. For example, the image forming unit 109 that forms an image by electrophotography forms an image on paper by transferring a toner image formed according to image data to the paper. Furthermore, in a case of forming an image by the inkjet head method, the image forming unit 109 forms an image on paper by ejecting ink to the paper according to image data.

The facsimile 110 is a device that executes a facsimile function of transmitting and receiving data (FAX data) via a telephone line. The facsimile 110 is also an example of an image processing unit that processes an image. The facsimile 110 transmits FAX data including image data read by the scanner 108 and receives image data from an external apparatus or a cloud, for example.

The communication interface 111 is a communication unit for communicating with an external apparatus. The communication interface 111 communicates with the image forming apparatus 12 or the PC 15 as an external apparatus via the LAN 13, for example. Furthermore, the communication interface 111 includes an interface that communicates with the LAN 13, the network 18, and the cloud server 19. The LAN 13 to which the communication interface 111 is connected may be configured by wire or wirelessly. For example, the communication interface 111 transmits image data read by the scanner 108 to an external apparatus or a cloud, and receives image data to be printed by the image forming unit 109 from the external apparatus or the cloud.

The device interface 112 is an interface that connects a device such as an external device that stores data. For example, the device interface 112 includes a Universal Serial Bus (USB). The external device connected to the device interface 112 is assumed to be a USB memory, a digital camera, a smartphone, or the like.

The system bus 113 is a communication path that connects the processor 101, the ROM 102, the RAM 103, the local storage device 104, the operation key 105, the touch panel 106, the display unit 107, the scanner 108, the image forming unit 109, the facsimile 110, the communication interface 111, the device interface 112, and the like. For example, the processor 101 is connected to each unit via the system bus 113 to transmit and receives data, a control signal, a command, a response, and the like.

The processor 101, the ROM 102, the RAM 103, the local storage device 104, and the communication interface 111 constitute a computer that functions as an information processing apparatus (image processing apparatus) that executes a program. For example, upon activating the computer, the processor 101 executes an activation program in the ROM 102 to activate an operating system (OS). The processor 101 sets a program area and a data area in the RAM 103 under the control of the OS. For example, the processor 101 executes various processing functions by the application by executing various applications using the API provided by the management program.

In the configuration example illustrated in FIG. 2, the local storage device 104 includes storage areas 131 to 137 that stores each program and data used in the program.

The storage area 131 is an area for storing an operating system (OS). The operating system stored in the storage area 131 is system software, and provides an operation basis of an application, that is, an application program.

The storage area 132 is a storage area for storing the MFP control program. The MFP control program stored in the storage area 132 is a program that executes various functions of the image forming apparatus 11. The storage area 132 stores various files, setting information, and the like necessary for executing the program.

The storage area 133 is a storage area for storing the management framework 20 as a management program. The management framework stored in the storage area 133 realizes data communication between applications by providing an API.

The storage area 134 is a storage area for storing the built-in application A. The storage area 135 is a storage area for storing information such as various files and setting information necessary for execution of the built-in application A as a storage for the built-in application A. The storage area 136 is a storage area for storing the built-in application B 41. The storage area 137 is a storage area for storing information such as various files and setting information necessary for executing the built-in application B as a storage for the built-in application B.

Here, as illustrated in FIG. 1, the built-in application A 30 includes the Home application 31 and the background (BG) application (hereinafter, referred to as a BG application) 32. The BG application 32 activates the internal communication server 21 or the external communication server 22 provided by the management framework 20. The BG application 32 performs communication by the internal communication server and the external communication server 22 that are made resident until the service stop is instructed.

For example, in a case where the built-in application A 30 cooperates with an application (the Home application 31 or the built-in application B 41) in the same image forming apparatus 11, the BG application 32 activates the internal communication server 21. In this case, the BG application 32 and the Home application 31 or the built-in application B 41 communicate with each other via the internal communication server 21.

In a case where the built-in application A 30 cooperates with the built-in application C 51 of another image forming apparatus 12, the BG application 32 activates the internal communication server 21 and the external communication server 22. In this case, the BG application 32 and the built-in application C 51 communicate with each other via the internal communication server 21 and the external communication server 22.

The program installed in the local storage device 104 may be provided to the image forming apparatus 11 through any path. For example, the program may be provided from the browser 16 of the PC 15 to the image forming apparatus 11. Furthermore, the program may be provided to the image forming apparatus 11 by being downloaded from a server on the network 18. In addition, the program may be provided from a storage device connected to the device interface 112 to the image forming apparatus 11.

Next, a communication (inter-application communication) function with another application by the built-in application in the image forming apparatus 11 according to the embodiment will be described.

In the configuration example illustrated in FIGS. 1 and 2, the built-in application A 30 of the image forming apparatus 11 has an inter-application communication function in which the BG application 32 communicates with another application. Inter-application communication by the BG application 32 is realized by a server process by the management framework 20. In a case of communicating with an application in the same image forming apparatus 11, the BG application 32 of the built-in application A activates the internal communication server 21. In addition, the BG application 32 of the built-in application A activates the internal communication server 21 and the external communication server in a case where communication is performed between applications of different image forming apparatuses.

The image forming apparatus 11 according to the embodiment has an inter-application communication setting table for setting which server process is to be activated according to the communication content (communication type) requested by the inter-application communication. The inter-application communication setting table is stored, for example, in the local storage device 104 of the image forming apparatus 11.

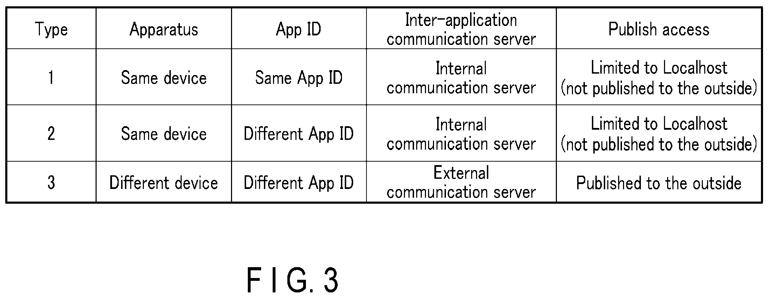

FIG. 3 is a diagram illustrating a configuration example of a setting table of inter-application communication stored in the local storage device 104 of the image forming apparatus 11 according to the embodiment.

The setting table illustrated in FIG. 3 stores, for each communication type, information indicating an image forming apparatus (MFP) in which an application is disposed, identification information (AppID) of the application, an inter-application communication server, an access publishing state, and the like. The setting table illustrated in FIG. 3 exemplifies setting information related to three communication types.

The first communication type (type 1) is a communication mode between built-in applications installed in the same image forming apparatus and having the same AppID. For example, in the configuration example illustrated in FIG. 1, the first communication type is communication between the Home application 31 and the background (BG) application 32 constituting the built-in application A 30. Since the Home application 31 and the BG application 32 constitute the same built-in application A 30, they have the same AppID.

The Home application 31 is a built-in application instructed to be executed by the operation key 105 or the touch panel 106 of the image forming apparatus 11. The execution content of the Home application 31 is operated by the user. The Home application 31 executes client side processing of communication using the communication client API 311. Furthermore, the BG application 32 is in a form of a built-in application that is not operated by a user's instruction in the image forming apparatus 11. The BG application 32 is resident as a process in the image forming apparatus 11. The BG application 32 executes processing as a server in response to a request from the client (client side application) using the communication server API 321.

In the first communication type (type 1), communication between built-in applications in the same image forming apparatus is performed, and therefore the internal communication server 21 is used as illustrated in FIG. 3. The internal communication server 21 does not publish the network port to the outside, and the access from the client is limited to localhost (the same image forming apparatus).

The second communication type (type 2) is a communication mode between built-in applications installed in the same image forming apparatus and having different ApIDs. For example, in the configuration example illustrated in FIG. 1, the second communication type is a communication mode between the BG application 32 of the built-in application A 30 and the built-in application B 41. Since the built-in application A 30 and the built-in application B 41 are different built-in applications, the BG application 32 and the built-in application B 41 of the built-in application A 30 have different AppIDs.

In the inter-application communication between the built-in application B 41 and the BG application 32, the built-in application B 41 executes client side processing of communication using the communication client API 411. On the other hand, the BG application 32 of the built-in application A 30 uses the communication server API 321 to execute processing as a server in response to a request from the client.

Since the second communication type (type 2) is communication between built-in applications in the same image forming apparatus (MFP_A) 11, the internal communication server 21 is used as illustrated in FIG. 3. The internal communication server 21 does not publish the network port to the outside and is set such that the access from the client is limited to localhost (the same image forming apparatus).

The third communication type (type 3) is a communication mode between different built-in applications installed in different image forming apparatuses. For example, in the configuration example illustrated in FIG. 1, the third communication type is communication between the BG application 32 of the image forming apparatus 11 and the built-in application C 51 of the image forming apparatus 12. That is, the communication between the BG application 32 and the built-in application C 51 is built-in inter-application communication across different apparatuses (the image forming apparatus (MFP_A) 11 and the image forming apparatus (MFP_B) 12.

The built-in application C 51 installed in the image forming apparatus 12 executes client side processing of communication using the communication client API 511. The BG application 32 of the built-in application A 30 installed in the image forming apparatus 11 uses the communication server API 321 to execute processing as a server in response to a request from the client. In the third communication type (type 3), communication between built-in applications of different apparatuses is performed, and therefore the external communication server 22 is used. In the third communication type, the BG application 32 is accessed from the communication client API 511 of the built-in application C 51 in a different apparatus. Therefore, the external communication server 22 publishes the network port to the outside.

Next, a specific example of an application of inter-application communication (type 1 or type 2) in which the image forming apparatus 11 according to the embodiment cooperates in the same image forming apparatus 11 will be described.

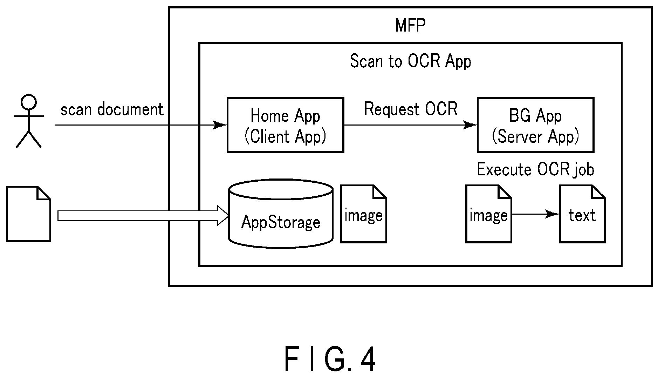

FIG. 4 is a diagram for describing an example of an application that communicates between built-in applications in the same image forming apparatus (MFP).

The application illustrated in FIG. 4 provides an image processing function including processing of reading an image by the scanner 108 and processing of executing the OCR process on image data read by the scanner 108. The image reading processing by the scanner 108 is executed by a Home application (HomeApp) which is a built-in application (client side application) activated according to a user's instruction. The OCR process on an image read by scanner 108 is executed by a background (BG) application (BG App) which is a resident built-in application (server side application). The Home application, which is the client side application, and the BG application, which is the server side application, communicate with each other in the same image forming apparatus.

For example, the BG application, which is a server side application, activates the internal communication server 21 in a case where the image forming apparatus is activated (or according to an instruction to enable the function). The Home application, which is a client side application, executes image reading processing by the scanner 108 in response to a user's instruction. The Home application transmits a request for executing the OCR process on the scanned image read by the scanner 108 to the BG application, which is a server side application, by the internal communication server 21. The BG application receives request for executing an OCR process from the Home application in the background by the internal communication server 21, and executes the OCR process on the scanned image.

As a result, the BG application, which is the server side application, can execute the OCR processing in the background. As a specific example, in a case where the scanned image is image data of a specific format, the BG application can set a result of OCR for the image data to text data of another specific format.

Next, a flow of communication (inter-application communication) between a plurality of applications by the image forming apparatus 11 according to the embodiment will be described.

First, a flow of inter-application communication (type 1 or 2 inter-application communication) in which the image forming apparatus 11 according to the embodiment communicates between applications in the same image forming apparatus 11 will be described.

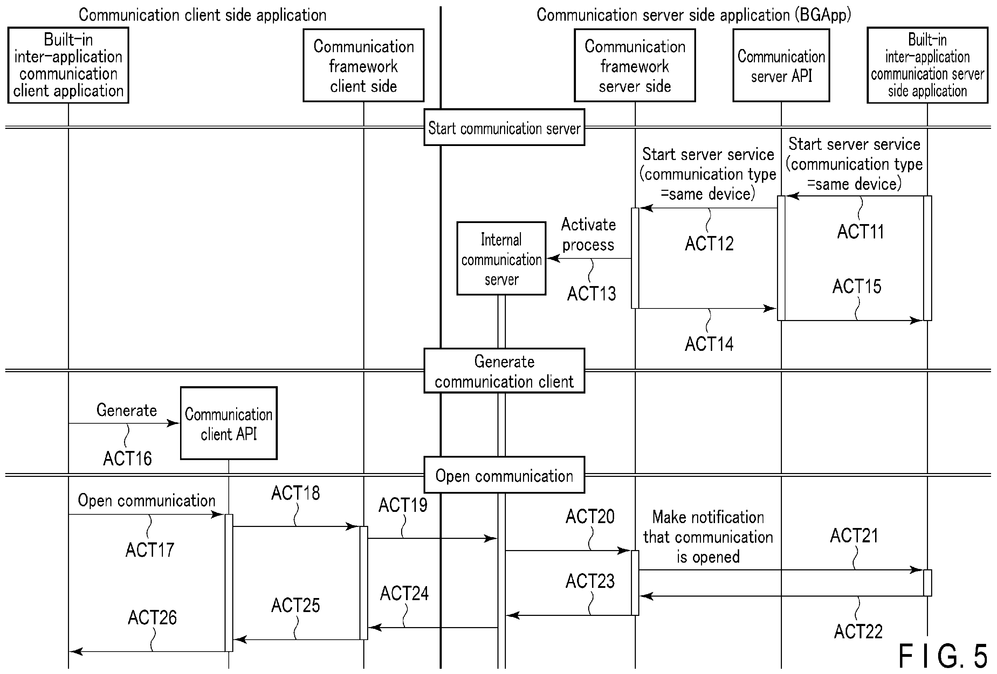

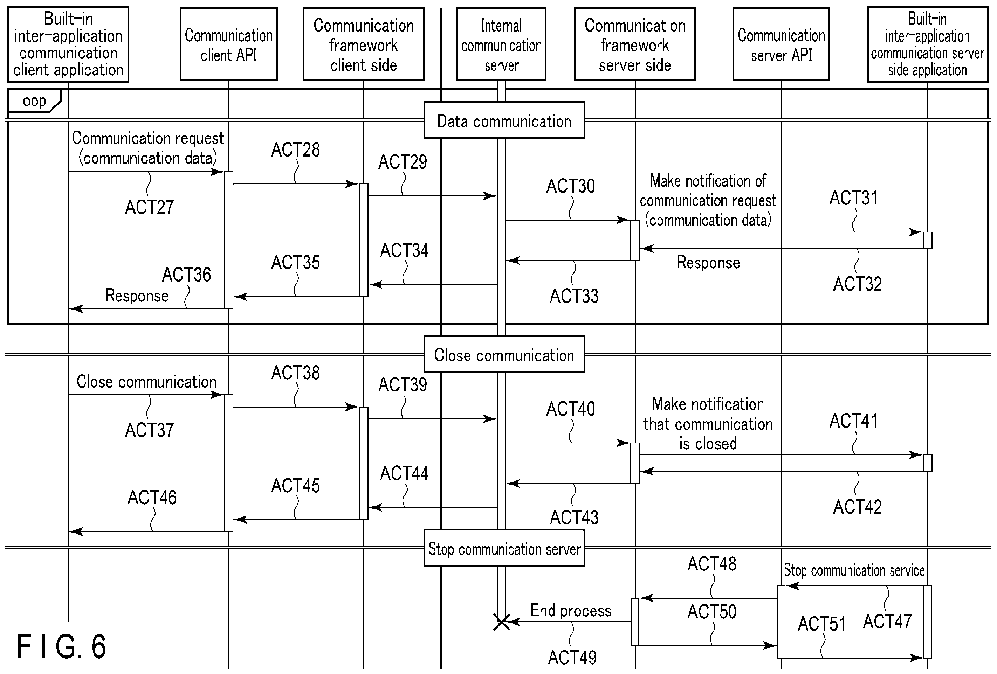

FIGS. 5 and 6 are sequence diagrams illustrating an example of inter-application communication in which communication is performed between built-in applications in the same image forming apparatus (MFP) 11.

In the configuration example illustrated in FIG. 1, the inter-application communication in the same image forming apparatus 11 includes communication (type 1) between the Home application 31 of the built-in application A and the BG application 32, or communication (type 2) between the BG application 32 and the built-in application B 41. Here, a case where the BG application 32 of the built-in application A 30 of the image forming apparatus 11 performs inter-application communication with the built-in application B 41 of the image forming apparatus 11 will be assumed.

In a case of activating the communication service by the BG application 32 of the built-in application A 30, the processor 101 of the image forming apparatus 11 activates the BG application 32 as the server side application. For example, in a case where the main power of the image forming apparatus 11 is turned on, the processor 101 starts the communication service by the BG application 32 of the built-in application A 30.

The BG application 32 executed by the processor 101 calls a "server service start API" of the communication server API 321 as a server service start request to start the communication service at the time of activation (ACT11). The communication server API 321 of BG application 32 designates the communication type as the input parameter in the server service start request. Here, inter-application communication is performed in the same image forming apparatus 11. Therefore, the communication server API 321 of the BG application 32 sets a value indicating the "same apparatus" as the communication type in the input parameter in the server service start request. The communication server API 321 of the BG application 32 notifies the management framework 20 of a server service start request whose communication type is the "same apparatus" (ACT12).

The management framework 20 executed by the processor 101 provides a server side communication framework. The server side communication framework activates the internal communication server process (internal communication server) 21 by the server service start request (API call) as a trigger (ACT13). The server side communication framework sets the internal communication server 21 to be private so as not to accept an access from the outside. That is, the internal communication server 21 is set so that the network port refuses access from an external IP address and permits access only from the inside (localhost).

Upon activating the internal communication server 21, the server side communication framework notifies the BG application 32 of a notification indicating the start of the server service via the communication server API 321 (ACT14-15).

By the processing of ACT11 to 15, the internal communication server 21 for performing inter-application communication with the built-in application in the same image forming apparatus 11 can use the built-in application of the image forming apparatus 11. The internal communication server 21 is not published to the outside and does not accept an access from an external apparatus. Therefore, inter-application communication is enabled in the image forming apparatus 11 without data leakage to the outside.

Next, generation of the communication client API 411 by the built-in application B 41 serving as a client side application in the image forming apparatus 11 will be described (ACT16).

After the communication server by the BG application 32 is started, the processor 101 of the image forming apparatus 11 receives an instruction to activate the built-in application B 41 serving as the client side application. For example, in the image forming apparatus 11, the user uses the operation key 105 or the touch panel 106 to receive an instruction to activate the built-in application B 41 as a client side application. The processor 101 of the image forming apparatus 11 activates the built-in application B 41 as a client side application that cooperates with the BG application 32 in response to an instruction to activate the built-in application B 41.

The built-in application B 41 executed by the processor 101 calls a "generative API" of the communication client API 411 as a client generation request at the time of activation (ACT16). The built-in application B 41 designates the server side application and the server address in a request for generating the communication client API 411.

For example, the communication client API 411 designates AppID (serverAppID) of the BG application 32 (built-in application A) as the server side application. In addition, the communication client API 411 designates the IP address (serverIPAddress) of the image forming apparatus 11 in which the server side application exists as the address of the server. Here, since the BG application 32 exists in the same image forming apparatus 11, the "localhost" is designated as the address (serverIPAddress) of the server.

Upon the communication client API 411 is generated, the built-in application B 41 is communicable as a client side application for the BG application 32 that is a server side application.

Next, a flow in a case where the built-in application B 41 as the client side application and the BG application 32 of the built-in application A 30 as the server side application start communication will be described (ACT17-26).

In a case of communicating with the BG application 32, the built-in application B 41 executed by the processor 101 calls "API for opening communication" of the communication client API 411 (ACT17). The communication client API 411 requests the client side communication framework to communicate with the BG application 32 via the internal communication server 21 (ACT18). The client side communication framework is provided by a management framework 20 executed by the processor 101 of the image forming apparatus 12.

The communication client API 411 designates the inside (localhost) of the same image forming apparatus 11 as the address (serverIPAddress) of the server. Therefore, the client side communication framework determines that it is sufficient to notify the internal communication server 21 in the same image forming apparatus 11 of a request for opening communication. Based on this determination, the client side communication framework notifies the internal communication server 21 in the image forming apparatus 11 of a request for opening communication (ACT19).

Upon receiving the request to open the communication, the internal communication server 21 opens the communication between the built-in application B 41 that is the client side application and the BG application 32 of the built-in application A that is the server side application. Upon opening the communication, the internal communication server 21 notifies the server side communication framework that the communication between the built-in application B 41 and the BG application 32 has been opened (ACT20). The server side communication framework notifies the BG application 32, which is the server side application, that the communication with the built-in application B 41 has been opened (ACT21).

Upon receiving the notification that the communication with the built-in application B 41 has been opened, the BG application 32 recognizes that the communication with the built-in application B 41 has become possible. The BG application 324 transmits a response to the notification that the communication has been opened to the server side communication framework (ACT22). The server side communication framework transmits the response from the BG application 32 to the internal communication server 21 (ACT23).

Upon receiving the response from the BG application 32, the internal communication server 21 notifies the built-in application B 41, which is the client side application, of a response indicating that the communication with the BG application 32 has been opened via the client side communication framework and the communication client API 411 (ACT24-26). As a result, the built-in application B 41 recognizes that the communication with the BG application 32 is enabled.

Next, a flow of data communication between the built-in application B 41 as the client side application and the BG application 32 of the built-in application A as the server side application will be described (ACT27-36).

In a case of transmitting data to the BG application 32, the built-in application B 41 executed by the processor 101 calls the "communication request API" of the communication client API 411 (ACT27). The communication client API 411 notifies the client side communication framework of a communication request including communication data from the built-in application B 41 to the BG application 32 (ACT28). The client side communication framework transmits a communication request including communication data from the communication client API 411 to the BG application 32 to the internal communication server 21 (ACT29).

Upon receiving the communication request from the built-in application B 41 to the BG application 32, the internal communication server 21 notifies the server side communication framework of the notification request (ACT30). The server side communication framework transmits a communication request including communication data to the BG application 32 of the built-in application A 30, which is a server side application (ACT31).

Upon receiving the communication request from the built-in application B 41, the BG application 32 of the built-in application A transmits a response indicating that the communication request including the communication data has been received to the internal communication server 21 via the server side communication framework (ACT32-33).

Upon receiving the response from the BG application 32, the internal communication server 21 transmits a response indicating that the BG application 32 has received the communication data to the client side communication framework (ACT34). The client side communication framework notifies the built-in application B 41, which is a client side application, of a response to the communication request via the communication client API 411 (ACT35-36). Through these processes, the built-in application B 41 and the BG application 32 of the built-in application A 30 execute data communication.

Next, a flow of processing in a case where the built-in application B 41 as the client side application and the BG application 32 as the server side application close communication will be described (ACT37-46).

In a case of ending the communication with the BG application 32, the built-in application B 41 calls "API for closing communication" of the communication client API 411 (ACT37). The communication client API 411 transmits a request for closing the communication with the BG application 32 to the internal communication server 21 via the client side communication framework (ACT38-39).

Upon receiving the request for closing the communication, the internal communication server 21 ends the communication between the built-in application B 41 and the BG application 32 of the built-in application A 30. Upon completion of the communication between the BG application 32 and the built-in application B 41, the internal communication server 21 notifies the BG application 32, which is the server side application, of the closed communication via the server side communication framework (ACT40-41).

Upon receiving the notification that the communication with the built-in application B 41 is closed, the BG application 32 recognizes that the communication with the built-in application B 41 is ended. Upon recognizing the end of the communication with the built-in application B 41, the BG application 32 of the built-in application A 30 transmits a response to the notification of closing the communication to the internal communication server 21 via the server side communication framework (ACT42-43).

Upon receiving the response from the BG application 32, the internal communication server 21 transmits a response indicating that the communication with the BG application 32 is closed to the client side communication framework (ACT44). The client side communication framework transmits the response from the BG application 32 to the built-in application B 41, which is the client side application, via the communication client API (ACT45-46). Through the above processing, the communication between the built-in application B 41 and the BG application 32 ends.

Next, a flow of processing in a case where the BG application 32 as a server side application stops a communication service for another application (built-in application B) in the same image forming apparatus will be described (ACT47-51).

In a case of stopping the communication service by the internal communication server 21, the BG application 32 calls the "communication service stop API" of the communication server API 321 (ACT47). The communication server API 321 notifies the server side communication framework of a request for the end of the internal communication server 21 (ACT48). The server side communication framework ends the process of the server service by the internal communication server 21 in response to a request for the end of the internal communication server 21 from the communication server API (ACT49).

Note that the server side communication framework may determine whether the process can be ended according to the state of the internal communication server 21. For example, the server side communication framework may determine whether the process can be ended depending on whether data communication is being executed. In a case of determining that the process of the internal communication server 21 cannot be ended, the server side communication framework may notify the BG application 32 of a response indicating that the process cannot be ended.

Upon stopping the internal communication server 21, the server side communication framework notifies the BG application 32 of the process end of the server service via the communication server API 321 (ACT50-51). Accordingly, the BG application 32 recognizes that the internal communication server 21 is stopped.

Next, a specific example of an application of inter-application communication (type 3) in which the image forming apparatus 11 according to the embodiment links built-in applications of different image forming apparatuses 11 will be described.

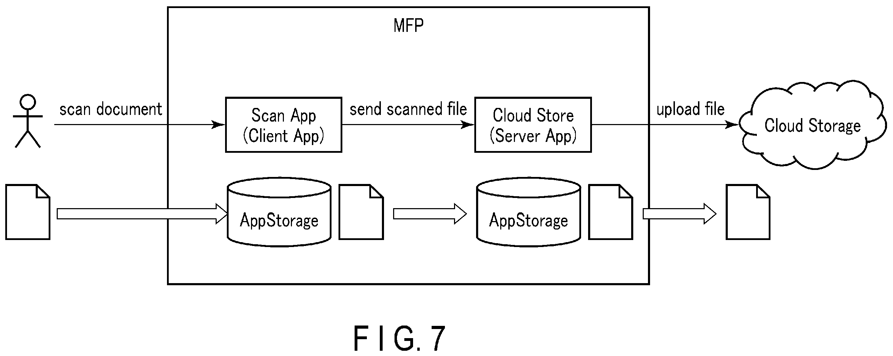

FIG. 7 is a diagram for describing an example of an application having a function of transmitting data to an external apparatus by a server side application that is a built-in application of the image forming apparatus (MFP).

The application illustrated in FIG. 7 provides an image processing function including a process of reading an image by the scanner 108 and a process of storing image data read by the scanner 108 in an external apparatus. The image reading processing by the scanner 108 is executed by a scan application (ScanApp) which is a client side application activated according to a user's instruction. The process of storing the scanned image read by the scanner 108 in an external apparatus (cloud server) is executed by a cloud storage application (CloudStore) which is a resident server side application.

For example, the server side application activates an external communication server for uploading data to the cloud server 19. The client side application executes image reading by the scanner 108 in response to a user's instruction, and supplies a scanned image (scanned file) read by the scanner 108 to the server side application. The server side application uploads the scanned image to a cloud storage such as the cloud server 19 designated in advance by the external communication server. As a result, the scanned image read by the scan application can be stored in the cloud storage.

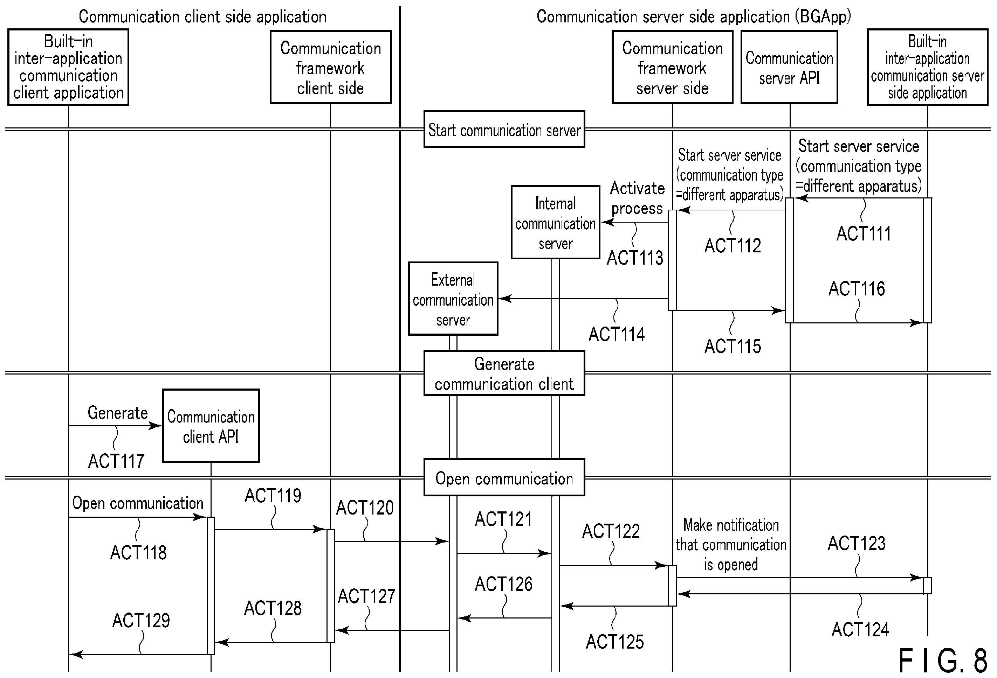

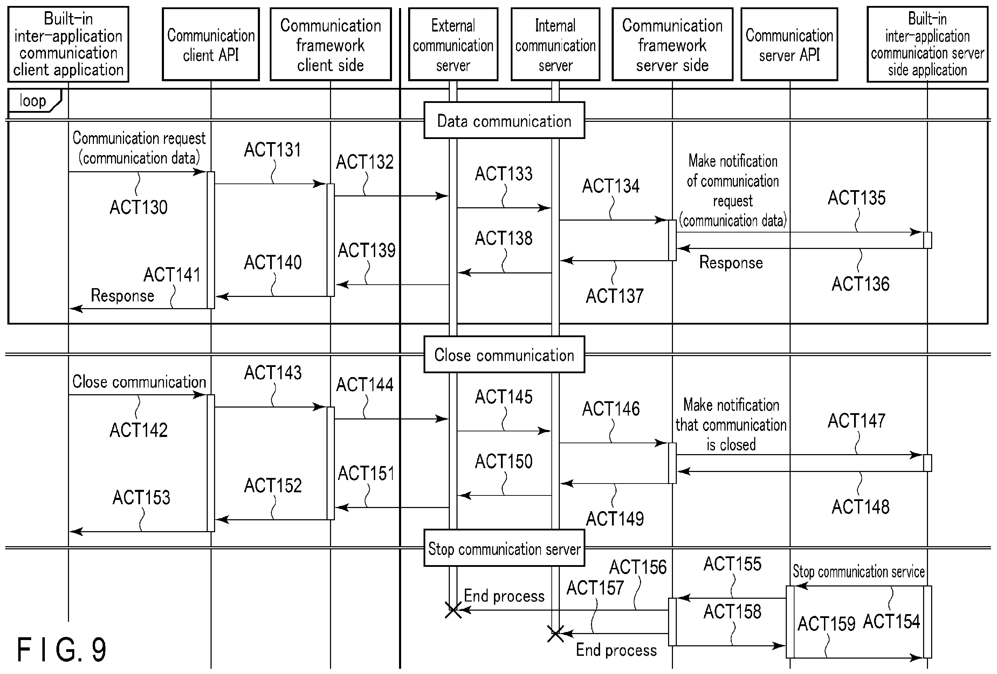

Next, a flow of inter-application communication (type 3 inter-application communication) in which an application of the image forming apparatus 11 according to the embodiment communicates with an application in another image forming apparatus 12 will be described. FIGS. 8 and 9 are sequence diagrams illustrating an example of inter-application communication performed between an application in the image forming apparatus (MFP) 11 and an application in another image forming apparatus 12.

Here, a description will be given assuming that the BG application 32 of the built-in application A 30 of the image forming apparatus 11 illustrated in FIG. 1 performs inter-application communication with the built-in application C 51 of another image forming apparatus 12.

In a case of providing a communication service between applications with the built-in application C of another image forming apparatus 12, the BG application 32 of the image forming apparatus 11 calls the "server service start API" of the communication server API and requests server service start (ACT111). Here, the BG application 32 sets a value indicating a "different apparatus" as the communication type indicated by the input parameter in the server service start request.

The communication server API 321 notifies the server side communication framework of the server service start request in which the "different apparatus" is designated as the communication type by the BG application 32 (ACT112). The server side communication framework is provided by a management framework 20 executed by the processor 101 of the image forming apparatus 11.

The server side communication framework activates the internal communication server process (internal communication server) 21 and the external communication server process (external communication server) 22 with a server service start request (API call) as a trigger (ACT113, 114). The server side communication framework determines that the communication type is a "different apparatuses" based on the input parameter of the server service start request. The server side communication framework determines to activate the internal communication server 21 and the external communication server 22 in a case where the communication type is a "different apparatuses".

In a case where the server process of the internal communication server 21 is activated, the server side communication framework is set so that the network port of the server 21 for internal communication rejects access from the external IP address and permits access only from the inside (localhost). Furthermore, in a case where the server process of the external communication server is activated, the server side communication framework is set so that the network port of the external communication server permits access from the external IP address. Furthermore, the external communication server is set to perform an operation (relay communication accessed to the external communication server from the external internet to the internal communication server) as a reverse proxy server.

Upon activating the internal communication server 21 and the external communication server 22, the server side communication framework notifies the BG application 32 of a notification indicating the start of the server service via the communication server API 321 (ACT115, 116).

By the processing of ACT111 to 116, the internal communication server 21 and the external communication server 22 for the BG application 32 of the image forming apparatus 11 and the application in another image forming apparatus 12 to perform inter-application communication can be used.

Next, generation of the communication client API 511 by the built-in application C 51 in another image forming apparatus 12 that is a client side application will be described (ACT117).

After the communication server (the internal communication server 21 and the external communication server 22) of the image forming apparatus 12 is started, the processor 101 of the image forming apparatus 11 causes the built-in application C 51, which is a client side application, to generate the communication client API 511. For example, in the image forming apparatus 12, the user inputs an instruction to activate the built-in application C 51 using the operation key 105 or the touch panel 106 for activation of the built-in application C 51. In response to the activation instruction, the processor 101 of the image forming apparatus 12 activates the built-in application C 51 as a client side application that cooperates with the BG application 32 of the image forming apparatus 11.

The built-in application C 51 executed by the processor 101 of another image forming apparatus 12 calls the "generative API" of the communication client API 511 at the time of activation (ACT117). The built-in application C 51 designates the application of the server and the address of the server as a request for generating the communication client 511 that communicates with the BG application 32 of the image forming apparatus 11.

Here, the communication client API 511 designates AppID (serverAppID) of the BG application 32 of the image forming apparatus 11 as the server side application. In addition, the communication client API 511 designates the IP address (serverIPAddress) of the image forming apparatus 11 in which the BG application 32 that is the server side application exists as the address of the server. Here, the BG application 32 of the built-in application A exists in another image forming apparatus 11. Therefore, the server address (serverIPAddress) designates the actual IP address of the image forming apparatus 11 on the server side.

Through the above processing, the communication client API 511 is generated in the built-in application C 51 of the image forming apparatus 12. In a case where the communication client API 511 is generated, the built-in application C 51 is communicable as a client side application for the BG application 32 that is a server side application. The built-in application C 51 receives start and end of communication with the BG application 32, which is a server side application, by the communication client API 511.

Next, a flow in a case where the built-in application B 41 as the client side application and the BG application 32 of the built-in application A 30 as the server side application start communication will be described (ACT118-129).

In a case of communicating with the BG application 32, the built-in application C 51 calls "API for opening communication" of the communication client API 511 (ACT118). The communication client API 511 requests the client side communication framework to communicate with the BG application 32 via the internal communication server 21 (ACT119). The client side communication framework is provided by a management framework 20 executed by the processor 101 of the image forming apparatus 12.

In the communication client API 511, the actual IP address of another image forming apparatus 11 is designated as the address of the server. Therefore, the client side communication framework determines that it is sufficient to notify the external communication server 22 in the designated image forming apparatus 11 of a request for opening communication. Based on such a determination, the client side communication framework notifies the external communication server 22 in the image forming apparatus 11 of a request to open the communication (ACT120).

The external communication server 22 of the image forming apparatus 11 relays a request for opening communication from the built-in application 51 of another image forming apparatus 11 to the internal communication server 21 in the same image forming apparatus 12 (ACT121).

The external communication server 22 and the internal communication server 21 of the image forming apparatus 11 open communication between the built-in application C 51 and the BG application 32 of another image forming apparatus 12 in response to a request for opening communication. Upon opening the communication with the built-in application C 51, the internal communication server 21 notifies the server side communication framework that the communication with the built-in application C 51 has been opened (ACT122). Upon receiving the notification that the communication with the built-in application C 51 has been opened, the server side communication framework notifies the BG application 32, which is the server side application, that the communication has been opened (ACT123).

Upon receiving a notification that the communication with the built-in application C 51 of another image forming apparatus 11 has been opened, the BG application 32 of the image forming apparatus 12 recognizes that the communication with the built-in application C 51 has become possible. The BG application 32 transmits a response to the notification that the communication has been opened to the server side communication framework (ACT124). The server side communication framework transmits the response from the BG application 32 to the internal communication server 21 (ACT125). The internal communication server 21 of the image forming apparatus 11 notifies the external communication server 22 in the same image forming apparatus 11 of the response from the BG application 32 (ACT126).

The external communication server 22 of the image forming apparatus 11 transmits a response indicating that the communication with the BG application 32 has been opened to the communication framework of the image forming apparatus 12 on the client side (ACT127). The communication framework of the image forming apparatus 12 transmits the response received from the external communication server 22 of the image forming apparatus 11 via the communication client API 511 to the built-in application C 51 (ACT128-129). As a result, the built-in application C 51 of the image forming apparatus 12 recognizes that the communication with the BG application 32 of the image forming apparatus 11 is enabled.

Next, a flow of data communication between the built-in application C 51 as the client side application and the BG application 32 as the server side application will be described (ACT130-141). In a case of transmitting data to the BG application 32 of the image forming apparatus 12, the built-in application C 51 of the image forming apparatus 11 calls the "communication request API" of the communication client API 511 (ACT130).

Here, the built-in application C 51 notifies the communication client API 511 of a communication request including communication data to be transmitted to the BG application 32 of the image forming apparatus 11. The communication client API 511 notifies the client side communication framework of a communication request including communication data to the BG application 32 (ACT131). The client side communication framework transmits a communication request including the communication data to the external communication server 22 of the image forming apparatus 11 in which the BG application 32 exists (ACT132).

Upon receiving the communication request from the built-in application C 51 of the image forming apparatus 11, the external communication server 22 of the image forming apparatus 12 relays the communication request to the internal communication server 21 (ACT133). Upon receiving the communication request to the BG application 32 from the external communication server 22, the internal communication server 21 notifies the server side communication framework of the communication request including the communication data to the BG application 32 (ACT134). The server side communication framework notifies the BG application 32 of the communication request from the built-in application C 51 received by the external communication server 22 and relayed to the internal communication server 21 (ACT135).

The BG application 32 of the image forming apparatus 11 receives a communication request including communication data from the built-in application C 51 of another image forming apparatus 12 from the server side communication framework. Upon receiving the communication request including the communication data from the built-in application C 51, the BG application 32 notifies the server side communication framework of a response indicating that the communication request has been received (ACT136). The server side communication framework notifies the internal communication server 21 of the response from the BG application 32 (ACT137). The internal communication server 21 notifies the external communication server 22 of the response from the BG application 32 received via the server side communication framework (ACT138).

The external communication server 22 of the image forming apparatus 11 transmits the response from the BG application 32 to the client side communication framework of the image forming apparatus 12 (ACT139). Upon receiving the response from the BG application 32 of the image forming apparatus 12, the client side communication framework of the image forming apparatus 11 transmits the response from the BG application 32 to the built-in application C 51, which is the client side application, via the communication client API 511 (ACT140-141). Through these processes, the built-in application C 51 of the image forming apparatus 12 and the BG application 32 of the image forming apparatus 11 execute data communication.

Next, a flow of processing in a case where the built-in application C 51 of the image forming apparatus 12 and the BG application 32 of the image forming apparatus 11 close communication will be described (ACT142-153).

In a case of ending the communication with the BG application 32, the built-in application C 51 of the image forming apparatus 12 calls the "API for closing communication" of the communication client API 511 (ACT142). The communication client API 511 notifies the client side communication framework of a request for closing the communication with the BG application 32 (ACT143). The client side communication framework transmits a request for closing the communication with the BG application 32 to the external communication server 22 of the image forming apparatus 11 (ACT144).

The external communication server 22 of the image forming apparatus 11 receives a request for closing the communication from another image forming apparatus 12. The external communication server 22 relays a request for closing the communication received from another image forming apparatus 12 to the internal communication server 21 (ACT145). The external communication server 22 and the internal communication server 21 of the image forming apparatus 11 close the communication between the built-in application C 51 and the BG application 32 of another image forming apparatus 12 in response to the request for closing the communication.

Upon closing the communication with the built-in application C 51, the internal communication server 21 notifies the server side communication framework that the communication with the built-in application C 51 has been closed (ACT146). Upon receiving the notification that the communication with the built-in application C 51 is closed, the server side communication framework notifies the BG application 32, which is the server side application, that the communication with the built-in application C 51 is closed (ACT147).

Upon receiving the notification that the communication with the built-in application C 51 is closed, the BG application 32 recognizes that the communication with the built-in application C 51 is ended. Upon recognizing the end of the communication with the built-in application C 51, the BG application 32 notifies the server side communication framework of a response to the notification of closing the communication (ACT148). The server side communication framework transmits the response from the BG application 32 to the internal communication server 21 (ACT149).

The internal communication server 21 notifies the external communication server 22 of the response from the BG application 32 (ACT150). The external communication server 22 transmits a response indicating that the communication with the BG application 32 is closed to the client side communication framework of the image forming apparatus 12 (ACT151).

Upon receiving the response from the external communication server 22, the client side communication framework transmits a response indicating that the communication with the BG application 32 is closed to the built-in application C 51, which is the client side application, via the communication client API 511 (ACT152-153). As a result, communication between the BG application 32 of the image forming apparatus 11 and the built-in application C 51 of the image forming apparatus 12 ends.

Next, a flow of processing in a case where the BG application 32 as a server side application stops a communication service for an application (built-in application B) in another image forming apparatus will be described (ACT154-159).

In a case of stopping the communication service by the internal communication server 21 and the external communication server 22, the BG application 32 calls the "communication service stop API" of the communication server API 321 (ACT154). The communication server API 321 notifies the server side communication framework of the presentation of the communication service (ACT155).

The server side communication framework ends the server process by the external communication server 22 and the internal communication server 21 in response to the communication service stop request from the communication server API 321 (ACT156, 157). For example, the server side communication framework first stops the external communication server 22 in response to the communication service stop request. In a case where the external communication server 22 ends, the network port published to the outside by the image forming apparatus 11 is closed. The server side communication framework stops the internal communication server 21 after stopping the external communication server 22. As a result, not only the external communication server 22 but also the internal communication server 21 is stopped.

Upon stopping the external communication server 22 and the internal communication server 21, the server side communication framework notifies the communication server API 321 of the end of the server process (ACT158). In response to this, the "communication service stop API" of the communication server API 321 returns a response indicating the end of the server process to the BG application (server side application) 32 which is the API call source (ACT159). As a result, the BG application 32, which is a server side application, confirms that the communication service has been presented.

Note that the server side communication framework may determine whether to stop the server process in response to the communication service stop request. For example, the server side communication framework may not stop the server process in a case where communication between client servers is established. In a case where the server process is not stopped in response to the communication service stop request, the "communication service stop API" of the communication server API 321 may return an error response to the BG application (server side application) 32 that is the API call source.

Specifically, in a case where the process of ACT130-14l or the process of ACT142-153 is being executed in a case where the "communication service stop API" of the communication server API 321 is called, the server process may not be stopped. Accordingly, in a case where the server side application (BG application 32) performs inter-application communication with two or more built-in applications (client side applications) in different image forming apparatuses, the server side communication framework can stop the server process in a state where communication with all the client side applications is disconnected.

Furthermore, the server side communication framework may determine whether to stop the external communication server 22 and the internal communication server 21. For example, the server side communication framework may determine whether the internal communication server 21 is ready to be stopped in a case where the external communication server 22 is ready to be stopped. As a result, the server side communication framework can maintain only the internal communication server 21 after stopping the external communication server 22.

As described above, according to the image forming apparatus according to the embodiment, it is possible to perform fine publishing control of an inter-application communication service according to an arrangement place of a built-in application that performs inter-application communication. In addition, the image forming apparatus enables network port publishing control by setting the internal communication server and the external communication server according to the communication type of inter-application communication. In addition, the image forming apparatus can minimize a state in which the network port is opened to the outside during service provision according to the use form. As a result, in the image forming apparatus, a possibility that communication or the like in the apparatus is attacked from the outside is reduced, and a security risk can be reduced.

The program executed by the processor of the image forming apparatus as the information processing apparatus according to the present embodiment may be transferred in a state of being stored in the electronic apparatus, or may be transferred in a state of not being stored in the electronic apparatus. In the latter case, the program may be transferred via a network or may be transferred in a state of being stored in a storage medium. The storage medium is a non-transitory tangible medium. The storage medium is a computer-readable medium. The storage medium may be any medium that can store a program such as a CD-ROM or a memory card and can be read by a computer, and its form is not limited.

While certain embodiments have been described, these embodiments have been presented by way of example only, and are not intended to limit the scope of invention. Indeed, the novel apparatus and methods described herein may be embodied in a variety of other forms; furthermore, various omissions, substitutions and changes in the form of the apparatus and methods described herein may be made without departing from the spirit of the inventions. The accompanying claims and their equivalents are intended to cover such forms or modifications as would fall within the scope and spirit of the inventions.

## Claims

1. An information processing apparatus comprising:
a communication interface that communicates with an external apparatus;
a memory that stores an application program and a management program; and
a processor that executes the application program using the management program, wherein
the processor
activates an internal communication server process by the management program in a case where an application program in the memory communicates with another application program in a same apparatus, and activates an external communication server process by the management program in a case where an application program in the memory communicates with another application program in an external apparatus connected through the communication interface.

2. The information processing apparatus according to claim 1, wherein
the processor
activates the internal communication server process in a case where a communication type designated by a request for starting a communication service generated in the application program is communication within a same apparatus, and activates the internal communication server process and the external communication server process in a case where a communication type designated by a request for starting the communication service is communication including communication with an external apparatus.

3. The information processing apparatus according to claim 2, wherein
the processor
performs data communication via the external communication server process and the internal communication server process in a case where the application program communicates with another application program in an external apparatus.

4. The information processing apparatus according to claim 2, wherein
the processor
stops the external communication server process in response to a request for stopping the communication service generated by the application program in a case where the application program communicates with the another application program in the external apparatus.

5. The information processing apparatus according to claim 4, wherein
the processor
stops the internal communication server process in response to a request for stopping the communication service generated by the application program in a case where the application program communicates with the another application program in a same apparatus, and
stops the external communication server process and the internal communication server process in response to a request for stopping the communication service generated by the application program in a case where the application program communicates with the another application program in an external apparatus.

6. The information processing apparatus according to claim 4, wherein
the processor
determines whether communication with the external apparatus is ready to be stopped according to a request for stopping the communication service generated in the application program in a case where the application program communicates with the another application program in an external apparatus, and stops the external communication server process in a case where the communication with the external apparatus is ready to be stopped.

7. The information processing apparatus according to claim 5, wherein
the processor
determines whether the internal communication server process is ready to be stopped in a case where a request for stopping communication service by the application program is generated, and stops the internal communication server process in a case where the internal communication server process is ready to be stopped.

8. The information processing apparatus according to claim 7, wherein
the processor
determines whether the internal communication server process is ready to be stopped after the external communication server process is stopped in a case where a request for stopping communication service by the application program is generated, and stops the internal communication server process in a case where the internal communication server process is ready to be stopped.

9. The information processing apparatus according to any one of claims 1 to 8, further comprising:
an image processing unit that processes an image, wherein
the application program is a program for executing data processing related to image processing by the image processing unit.

10. The image processing apparatus according to claim 9, wherein
the image processing unit is an image forming unit.

11. The image processing apparatus according to claim 9, wherein
the image processing unit is a scanner.

12. A non-transitory storage medium storing a program for causing a processor of an information processing apparatus including a communication interface to:
activate an internal communication server process in a case where an application program communicates with another application program in a same apparatus, and
activate an external communication server process in a case where an application program communicates with another application program in an external apparatus connected through the communication interface.

13. The non-transitory storage medium storing the program according to claim 12, wherein
the program causes the processor to:
activate the internal communication server process in a case where a communication type designated by a request for starting a communication service generated in the application program is communication within a same apparatus, and
activate the internal communication server process and the external communication server process in a case where a communication type designated by a request for starting the communication service is communication including communication with an external apparatus.

14. The non-transitory storage medium storing the program according to claim 13, wherein
the program causes the processor to:
perform data communication via the external communication server process and the internal communication server process in a case where the application program communicates with another application program in an external apparatus.

15. The non-transitory storage medium storing the program according to claim 13, wherein
the program causes the processor to:
stop the external communication server process in response to a request for stopping the communication service generated by the application program in a case where the application program communicates with the another application program in an external apparatus.

## Amended claims

### Amended claims in accordance with Rule 137(2) EPC.

1. An information processing apparatus (11) comprising:
a communication interface (111) that communicates with an external apparatus;
a memory (104) that stores an application program (30) and a management program (20); and
a processor (101) that executes the application program using the management program, wherein
the processor:
activates an internal communication server process by the management program in a case where an application program in the memory communicates with another application program (41) in the information processing apparatus, and activates an external communication server process by the management program in a case where an application program in the memory communicates with another application program (12) in an external apparatus connected through the communication interface (13);
activates the internal communication server process in a case where a communication type designated by a request for starting a communication service generated in the application program is communication within a same apparatus, and activates the internal communication server process and the external communication server process in a case where a communication type designated by a request for starting the communication service is communication including communication with an external apparatus;
stops the external communication server process in response to a request for stopping the communication service generated by the application program in a case where the application program communicates with the another application program in the external apparatus, **characterised in that** the processor
stops the internal communication server process in response to a request for stopping the communication service generated by the application program in a case where the application program communicates with the another application program in a same apparatus, and
stops the external communication server process and the internal communication server process in response to a request for stopping the communication service generated by the application program in a case where the application program communicates with the another application program in an external apparatus.

2. The information processing apparatus according to claim 1, wherein
the processor
performs data communication via the external communication server process and the internal communication server process in a case where the application program communicates with another application program in an external apparatus.

3. The information processing apparatus according to claim 1, wherein
the processor
determines whether communication with the external apparatus is ready to be stopped according to a request for stopping the communication service generated in the application program in a case where the application program communicates with the another application program in an external apparatus, and stops the external communication server process in a case where the communication with the external apparatus is ready to be stopped.

4. The information processing apparatus according to claim 1, wherein
the processor
determines whether the internal communication server process is ready to be stopped in a case where a request for stopping communication service by the application program is generated, and stops the internal communication server process in a case where the internal communication server process is ready to be stopped.

5. The information processing apparatus according to claim 4, wherein
the processor
determines whether the internal communication server process is ready to be stopped after the external communication server process is stopped in a case where a request for stopping communication service by the application program is generated, and stops the internal communication server process in a case where the internal communication server process is ready to be stopped.

6. The information processing apparatus according to any one of claims 1 to 5, further comprising:
an image processing unit that processes an image, wherein
the application program is a program for executing data processing related to image processing by the image processing unit.

7. The information processing apparatus according to claim 6, wherein
the image processing unit is an image forming unit.

8. The information processing apparatus according to claim 6, wherein
the image processing unit is a scanner.

9. A non-transitory storage medium storing a program for causing a processor of an information processing apparatus including a communication interface to:
activate an internal communication server process in a case where an application program communicates with another application program in the information processing apparatus, and
activate an external communication server process in a case where an application program communicates with another application program in an external apparatus connected through the communication interface;
activate the internal communication server process in a case where a communication type designated by a request for starting a communication service generated in the application program is communication within a same apparatus, and
activate the internal communication server process and the external communication server process in a case where a communication type designated by a request for starting the communication service is communication including communication with an external apparatus
stop the external communication server process in response to a request for stopping the communication service generated by the application program in a case where the application program communicates with the another application program in an external apparatus, **characterised in that** the the program further causes the processor to
stop the internal communication server process in response to a request for stopping the communication service generated by the application program in a case where the application program communicates with the another application program in a same apparatus, and
stop the external communication server process and the internal communication server process in response to a request for stopping the communication service generated by the application program in a case where the application program communicates with the another application program in an external apparatus.

10. The non-transitory storage medium storing the program according to claim 12, wherein
the program causes the processor to:
perform data communication via the external communication server process and the internal communication server process in a case where the application program communicates with another application program in an external apparatus.
